# EUROPEAN PATENT APPLICATION

(11) **EP 4 760 433 A1**
(43) Date of publication of application: **17.06.2026**
(21) Application number: 25221981.1
(22) Date of filing: 09.12.2025
(51) Int. Cl.: G05B 23/02, B64F 5/30, F01D 25/00, G06Q 10/20

(54) **PERFORMANCE ANALYSIS OF AN AIRCRAFT ENGINE COMPONENT BASED ON WASHING**

(30) Priority: 13.12.2024 US 202463733502 P; 14.03.2025 US 202519079675
(71) Applicant: General Electric Company, Cincinnati, Ohio 45215 (US)
(72) Inventor: PONNUCHAMY, Balasubramaniam, 560066 Bengaluru (IN); GIBBS, Peter, West Chester, 45069 (US); K, Abhiram, Dubai (AE)
(74) Representative: Openshaw & Co.

(57) **Abstract**

A method for performance analysis of an aircraft engine component includes accessing data of an aircraft engine component, the data including a performance signal; detecting a signature of the performance signal; performing a first analysis by an analytical model, based on the data and the performance signature, to determine performance metrics of the aircraft engine component; converting a first performance metric to a second performance metric based on a derivative, the derivative being derived from at least two of the determined performance metrics; determining an analytic for the aircraft engine component based on at least one of the derived derivative or the determined performance metrics; selectively providing a washing recommendation for the aircraft engine component based on the determined analytic; and selectively causing the aircraft engine component to be washed based on the washing recommendation.

## Description

### CROSS-REFERENCE TO RELATED APPLICATION

This application claims the benefit of U.S. Provisional Patent Application No. 63/733,502, filed on December 13, 2024, the entire contents of which are hereby incorporated herein by reference.

### TECHNICAL FIELD

The present disclosure relates to performance analysis and recovery for aircraft engine components. Particularly, the present disclosure relates to a system and a method for engine wash performance analysis.

### BACKGROUND

Washing an aircraft's engine maintains performance and efficiency. Over time, contaminants can build up on aircraft engine components, which can lead to reduced airflow, increased drag, and higher fuel consumption. Regular washing helps remove these deposits, restoring the engine's optimal operating conditions and extending its lifespan. Additionally, a clean engine runs cooler and experiences less wear, which reduces maintenance costs and the likelihood of in-flight issues. Overall, engine washing is a preventive measure that supports performance and cost-effectiveness

### BRIEF DESCRIPTION OF THE DRAWINGS

A better understanding of the features and advantages of the disclosed technology will be obtained by reference to the following detailed description that sets forth illustrative aspects, in which the principles of the technology are utilized, and the accompanying drawings of which:
FIG. 1 illustrates a system for engine wash performance analysis for aircraft engine components, in accordance with the aspects of this disclosure;
FIG. 2 is a block diagram of a controller of the system of FIG. 1, in accordance with aspects of this disclosure;
FIG. 3 is a graph illustrating engine exhaust gas temperature hot day margin (EGTHDM) in accordance with aspects of this disclosure; and
FIG. 4 is an exemplary flow diagram of a method of performance analysis of an aircraft engine component in accordance with aspects of this disclosure.

### DETAILED DESCRIPTION

Although this disclosure will be described in terms of specific aspects, it will be readily apparent to those skilled in this art that various modifications, rearrangements, and substitutions may be made without departing from the spirit of this disclosure.

For the purpose of promoting an understanding of the principles of this disclosure, reference will now be made to exemplary aspects illustrated in the drawings, and specific language will be used to describe the same. It will nevertheless be understood that no limitation of the scope of this disclosure is thereby intended. Any alterations and further modifications of the features illustrated herein, and any additional applications of the principles of this disclosure, as illustrated herein, which would occur to one skilled in the relevant art and having possession of this disclosure, are to be considered within the scope of this disclosure..

An aircraft engine component may need cleaning of material (e.g., contaminants) deposited on high-pressure compressor (HPC) flow path hardware. Deposited material may include, for example, dust, sand, hydrocarbon pollutants, salt-laden air (e.g., from coastal airports), and/or de-icing fluid (e.g., from runways and/or taxiways). Different fluids may be used for washes, including water, foam, and detergent. For example, there are at least two types of wash cleaning: water wash and foam wash. The foam wash provides the benefit of using chemistry to remove sand and dust contamination, which is commonly encountered on flight paths near areas such as the Middle East.

Washing provides the benefits of HPC efficiency improvement, high-pressure turbine (HPT) efficiency improvement, exhaust gas temperature (EGT) recovery, including exhaust gas temperature hot day margin (EGTHDM) recovery, a deterioration trending parameter estimating health of engine relative to certified max temperature level, using on-wing measured EGT at takeoff, fuel flow recovery, reduced carbon emissions, performance retention (e.g., cycles following wash for which benefits are sustained), reduced gas-path temperatures, reduced metal temperatures, mitigation of mid-life hot section distress, and improved time on wing, which ultimately extend the interval between shop visits. In particular, the variability in wash methods and conditions presents a unique challenge. The different washing fluids such as water, foam, and/or detergent may yield different levels of contaminant removal and efficiency gains. Additionally, the type of wash machine used and the frequency and/or cycle duration of the washing process further introduce inconsistencies in performance outcomes. These variations make it challenging to establish a standardized or predictive model for post-wash performance improvements.

Current systems and methods are less effective in accurately quantifying the benefits of washing. Specifically, current systems and methods include insufficient metrics available to address customer requests, such as quantifying the recovery normalized for deteriorations and comparing wash benefits across different customers. For example, when engines are currently recommended for washes, the selection process involves manually analyzing large amounts of data, such as current EGT margins, previous shop visits, and/or past wash history across many engines. This manual selection process is time-consuming and limited to only a few performance variables for decision-making. Moreover, such methods only rely on 3-4 engine operational parameters, which provide a narrow view of engine wash effectiveness. For example, key metrics such as exhaust gas temperature hot day margin (EGTHDM) recovery, fuel flow reduction, high-pressure compressor (HPC) efficiency, and high-pressure turbine (HPT) efficiency can be affected by multiple factors. As a result, it may be unclear how a wash affected engine performance over time.

The present application relates to systems and methods for engine performance analysis for engine washing. The systems and methods described herein integrate data-driven analytics to evaluate the effects of engine washing on key performance metrics such as exhaust gas temperature hot day margin (EGTHDM) recovery, fuel flow reduction, and CO₂ emission reduction. For example, data is aggregated and analyzed from multiple sources, including flight records, installation and removal logs, wash and foam cart data, and/or additional operational data. Using machine learning and statistical modeling techniques, the systems and methods herein detect performance changes, normalize variations due to different operational conditions, and/or generate optimized wash recommendations.

The systems and methods herein provide benefits over present engine performance analyses by leveraging big data analytics and predictive modeling. Unlike present analyses that rely on limited operational parameters and manual assessments, the systems and methods herein integrate a diverse set of performance metrics across various aircraft and engine types. Advanced statistical techniques, including Winsorized mean averaging and machine learning-based event detection, provide the benefit of more accurate and reliable insights into engine performance recovery. Additionally, the systems and methods herein quantify wash benefits across different wash types (e.g., water vs. foam washing) and operations, enabling optimization of maintenance schedules, reduction in fuel consumption, reduction in carbon emissions, and extension of engine life. These benefits therefore streamline maintenance planning, enhance operational efficiency, and improve long-term cost savings.

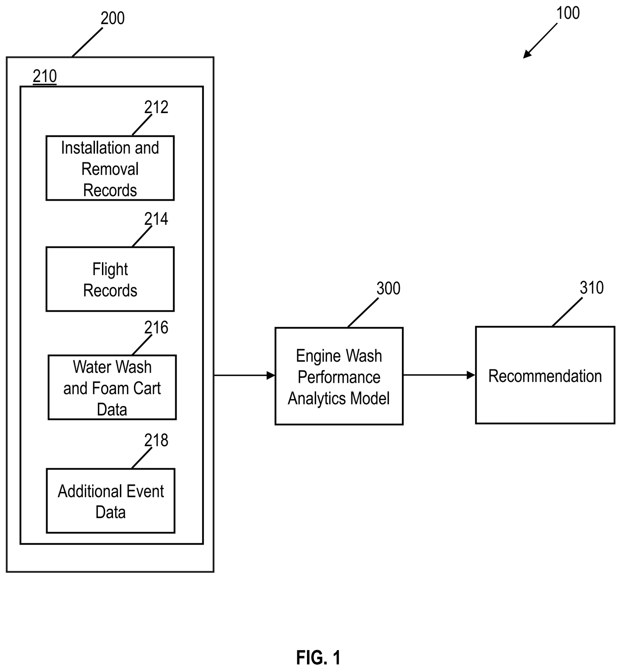

FIG. 1 illustrates a system 100 for performance analysis of an aircraft engine component, according to an aspect of this disclosure. The system 100 generally includes a controller 200 and an analytics model 300. The controller 200 executes the analytics model 300. The system 100 provides the benefit of a set of techniques and streamlined processes, such as analytics model 300. These techniques and/or processes are designed to more accurately quantify the benefits of engine washes using aggregated data from various sources. For example, the analytics model 300 provides an analytical method for generating performance analytics by selecting various operational parameters from a set of 25+ parameters. The analytics model 300 provides an assessment of past engine performance to drive insights into improved fleet management (e.g., engine selection for a future wash, such as an engine expected to benefit the most from the future wash) and/or estimate a future state of an aircraft engine component after a wash.

The system 100 determines performance improvements from engine washing, such as EGTHDM improvement, fuel flow and carbon dioxide emission reduction, and/or additional performance metrics, which enable various performance analyses for different regions, fleets and sub-fleets across different product lines and wash types. In addition, the system 100 provides the benefits of more accurately analyzed performance improvements, which were previously difficult to determine due to numerous variables impacting engine performance recovery. For example, different route structures may lead to different levels of dust exposure, which in turn affects a degree of engine deterioration, and various wash machines may be used with different fluids and at different wash cycle intervals. The system 100 quantifies the benefits of washing in a detailed manner, such as quantifying the recovery normalized for various engine deterioration characteristics, which was previously difficult to determine due to lack of sufficient metrics and/or engine operational parameters available, and/or inconsistent methods and processes used to complete the analysis.

The analytics model 300 determines analytics of an aircraft engine component based on a washing of the aircraft engine component. As used herein, analytics refer to performance data of an aircraft engine component that is collected, processed, and/or analyzed following a wash, which are used to quantify performance improvements, detect trends, and/or generate recommendations for optimizing engine washing schedules and overall engine efficiency. For example, analytics are used to provide a recommendation for when an aircraft engine or component thereof should be washed to improve attributes such as engine performance, and selectively causes the aircraft engine or component thereof to be washed based on the recommendation. In aspects of this disclosure, the aircraft engine component includes an inlet, an exhaust system, a fuel system, a control system, a cooling system, and/or a gearbox of an engine, such as an aircraft engine.

With continued reference to FIG. 1, the system 100 integrates data from various sources, such as data from a database 210. For example, the system 100 integrates installation and removal records 212, flight records 214, water wash and foam cart data 216, and/or other data such as additional event data 218 into database 210.

The installation and removal records 212 are used to determine a timeframe when an aircraft engine component was installed on and/or removed from an aircraft. Installation may include initial installation, reinstallation, and/or repair of components. The timeframe is used to segregate the life of the engine between on-wing operation and shop visits, for example, to differentiate work scope outlining for the engine at shop visits that would change performance independent of typical on-wing deterioration and/or wash impacts. In one aspect, the installation and removal records 212 include serial numbers, maintenance logs, dates of installation and/or removal, reasons for installation and/or removal, and/or total operational time or engine cycles since the last installation. In aspects, the installation and removal records 212 are of various aircraft engine components.

Flight records 214 of events stored in the installation and removal records 212 for the engine can be used to quantify performance changes across the events. Flight data, without limitation, may include operational flight data (e.g., flight hours, cycles, and/or profiles), environmental exposure data (e.g., locations, conditions, and/or air quality indices), engine performance metrics, and/or flight path and duration data.

Water wash and foam cart data 216 may include, for example, particular wash methods, wash cycle count, cart data, cart performance, water pressure, water volume, water quality, water temperature, wash type, wash mediums, water/foam pressure, foam composition, foam concentration, foam volume, and/or wash start and end times. As used herein, a cart refers to a system and/or equipment used for executing an engine wash, including water and/or foam-based wash systems that deliver cleaning fluids to an aircraft engine component during a wash cycle. Moreover, cart data refers to operational and/or performance data collected from the wash cart, including wash cycle count, water and/or foam pressure, wash duration, fluid composition, temperature, and/or flow rate, which are used to assess wash effectiveness and impact on engine performance.

Additional event data 218 may include events such as engine thrust rating changes, engine software changes, and/or movement of an engine from one aircraft to another. The system 100 interacts with analytics model 300. The analytics model 300 receives the integrated data from database 210 as input, which is analyzed using application-specific instructions, such as instructions tailored to process aviation-specific datasets located in controller 200. The controller 200 may execute the application-specific instructions using predefined computational processes and/or algorithms to analyze data (e.g., review engine performance, detect wash events, quantify wash benefits, and generate recommendations). For example, the controller 200 may execute instructions to calculate deterioration rates by measuring how EGTHDM, HPC efficiency, and fuel flow change between washes. The system 100 determines analytics relating to an aircraft engine component, such as performance analytics following an engine wash. The analytics are utilized by the system 100 to output a recommendation, such as when an aircraft engine component should be washed to most effectively improve engine performance.

The analytics model 300 applies event detection analytics, such as analytics for performance signal shift detection and unreported events, in order to detect signatures in performance signals (e.g., HPC efficiency, HPT efficiency, EGT, and/or fuel flow) indicative of a wash event (e.g., as opposed to a non-wash event). The analytics model 300 uses event detection analytics, including multiple performance signals, to detect a relational change in the performance signals over a threshold period of flight cycles, which signifies a high probability of a wash and subsequently of a detected event (e.g., a detected signature). The event detection analytics utilize records in database 210 (e.g., water wash and foam cart data 216) to determine a point in time when a wash likely occurred, even if the wash was not reported explicitly. In aspects, performance signals such as HPC efficiency and/or HPT efficiency are calculated parameters, e.g., determined from a separated process using thermodynamic relationships derived from sensor measurements (e.g., T1 (inlet air temperature), T3 (compressor exit temperature), P3 (compressor exit pressure), and/or fuel flow) to estimate the parameters. In aspects, the analytics model 300 initially calculates a baseline of normal engine performance metrics under typical operating conditions by analyzing historical data from similar aircraft engines operating under typical conditions. The baseline generated serves as a reference point to detect deviations in performance that may indicate a need for maintenance and/or the impact of a wash event. For example, if an engine typically operates with an EGTHDM of 15°C under normal conditions and the EGTHDM increases to 18°C after washing, the analytics model 300 can attribute a 3°C improvement to the wash. In aspects, the analytics model 300 quantifies the deterioration and/or degradation of performance signals (e.g., deterioration and/or degradation that would imply unrecoverable loss from mechanisms such as blade erosion) by leveraging historical data, predictive modeling, and statistical trend analysis. For example, based on a downward trend in post-wash recovery, the analytics model 300 may determine that blade erosion is the root cause, rather than not contamination, implying an unrecoverable loss that cannot be resolved by washing.

The analytics model 300 arranges the aircraft engine component life events (e.g., historical and unreported wash events) in a chronological order, e.g., in order to sequentially calculate wash performance, as sequential order is helpful for wash analytics (e.g., in order to attribute changes to a particular event). In doing so, analytics model 300 improves maintenance practices at key milestones or events. For example, as engine deterioration may occur in a predictable manner over a period of time, wash events may subsequently be scheduled at specific points in time. Analytics model 300 assesses this prior history of an engine state, providing the benefit of improved knowledge of the significance and/or expectations of wash impact on engine performance over time, thereby improving engine efficiency, and extending engine lifespan.

By analyzing deterioration and recovery trends over time, the analytics model 300 quantifies both the immediate and long-term benefits of washing. In general, wash performance is determined by analyzing key engine performance metrics prior to and/or after an engine wash, such as EGTHDM recovery, fuel flow reduction, emissions reduction, tie on wing extension, HPT efficiency and./or HPC efficiency. For example, by analyzing time on wing extension, detecting a longer interval between maintenance events suggests slower engine deterioration. In another example, increased stress can accelerate contamination buildup, necessitating more frequent washes. Performance calculations are assessed and/or adjusted based on integrated data, such as install/removal of an aircraft engine component, flight records, and/or wash data. The wash performance calculations are further refined based on influencing factors such as additional install/removal of aircraft engine components, engine thrust rating changes and/or tail swaps. For example, performance baseline resets after a component installation require adjustments to reflect new degradation rates. In another example, an engine thrust rating change may increase stress, which can accelerate contamination buildup and necessitate more frequent engine washes.

The system 100 generally includes various metrics (e.g., engine wash metrics) across multiple parameters which can include a set of 25 or more parameters, such as engine operational parameters. For example, metrics may include takeoff EGT recovery, cruise EGT deterioration since last wash, cruise fuel flow recovery ratio, and/or climb HPC efficiency deterioration since installation of an aircraft engine component, such as the HPC and/or HPT. In one aspect, the parameters are derived from a combination of flight phases/operational conditions, measurements, and/or metrics of various measurements. The metrics are determined using an advanced Winsorized mean statistical technique, e.g., an averaging technique, with data quality checks further applied to the metrics. Winsorized mean techniques reduce the influence of outlier data, which may skew a perception of reality, without being overly conservative, e.g., ignoring data completely. As engine environments are inherently variable, such techniques better align with expected real-world performance, making recommendations (e.g., wash recommendations) more applicable and actionable while retaining the remainder of the dataset for analysis, which ensures that results are not skewed.

Wash benefits are quantified by the analytics model 300 using smart normalization techniques (e.g., normalization for deterioration and/or cycle-since-shop-visits, which track engine deterioration and/or performance recovery based on a number of cycles since the last maintenance event, repair, and/or overhaul.) and/or weighting techniques. The normalization techniques provide the benefits of improved reliability of analytics by focusing on central trends and improved determination precision (e.g., determination for a wash recommendation) with real-time decision making, which is especially beneficial for complex, variable datasets. Normalization can ensure that observed benefits of engine washing are interpreted on a consistent basis, where potential sources of variation in output data are mitigated by maintaining constant levels based on independent variables. For example, normalization can avoid overstated and/or understated values in output data due to factors unrelated to a wash cycle itself. A weighted averaging may be used to give more weight to certain performance metrics, for example, to give more weight to performance signals with an inherently larger signal-to-noise ratio compared to other performance signals.

The analytics model 300 utilizes derived derivatives to convert one parameter metric to another in order to quantify a wash benefit when another parameter is absent (e.g., converting EGTHDM to fuel flow and/or converting HPC efficiency to EGTHDM). The quantified metrics may derive analytics that are helpful to determine wash benefits, including detailed engine wash data such as the use of foam over water, wash benefits for a first customer versus a second customer, and/or a first wash interval versus a second wash interval.

The analytics determined by analytics model 300 are utilized to output the recommendations 310 using customer data and/or linearized, cycles-based performance deterioration and recovery modeling techniques (e.g., sawtooth modeling techniques). This data and/or these techniques determine performance recovery and/or evaluate different what-if scenarios (e.g., wash interval, frequency, and/or type changes, and annualized/aircraft changes) to generate a recommended course of action for improving performance and durability of an aircraft engine component. This provides the benefit of quantifying wash advantages (e.g., wash benefits) to alternative scenarios. As used herein, a sawtooth modeling technique is generally a simple sawtooth model used to understand the relationship between inter wash deterioration (e.g., gradual decline in engine performance that occurs between consecutive wash cycles), recovery, and/or deterioration rate (e.g., how quickly engine performance declines between wash cycles), among other factors, versus wash cycles. The recommendations 310 of the analytics model 300 are used to make the most advantageous wash interval recommendations and/or maintenance decisions, including foam wash or water wash planning and sequence. In aspects, the system 100 provides a web-based application that can be used to develop custom wash schedules for various engine lines and aircraft engine components.

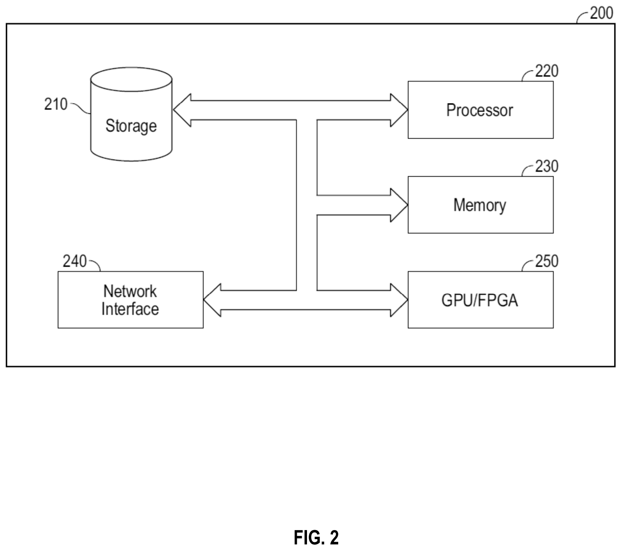

Referring now to FIG. 2, exemplary components in the controller 200 in accordance with aspects of the present disclosure include, for example, a database 210, one or more processors 220, at least one memory 230, and a network interface 240. In aspects, the controller 200 includes a graphical processing unit (GPU) and/or field programmable gate array (FPGA) 250, which may be used for processing machine learning network models.

Database 210 can be located in storage. The term "storage" may refer to any device or material from which information may be capable of being accessed, reproduced, and/or held in an electromagnetic or optical form for access by a computer processor. Storage may be, for example, volatile memory such as RAM, non-volatile memory, which permanently holds digital data until purposely erased, such as flash memory, magnetic devices such as hard disk drives, and optical media such as a CD, DVD, Blu-ray Disc^{™}, or the like.

In various aspects, data may be stored on controller 200, including, for example, user preferences, historical data, and/or other data. The data can be stored in database 210 and sent via a system bus to processor 220.

Briefly, processor 220 executes various processes based on instructions that can be stored in the memory 230 and which utilize the data from database 210. With reference also to FIG. 1, a request from a user device, such as a mobile device or a client computer, can be communicated to the server through the server's network interface 240. The illustration of FIG. 2 is exemplary, and persons skilled in the art will understand that other components that may exist in a controller 200. Such other components are not illustrated in FIG. 2 for clarity of illustration.

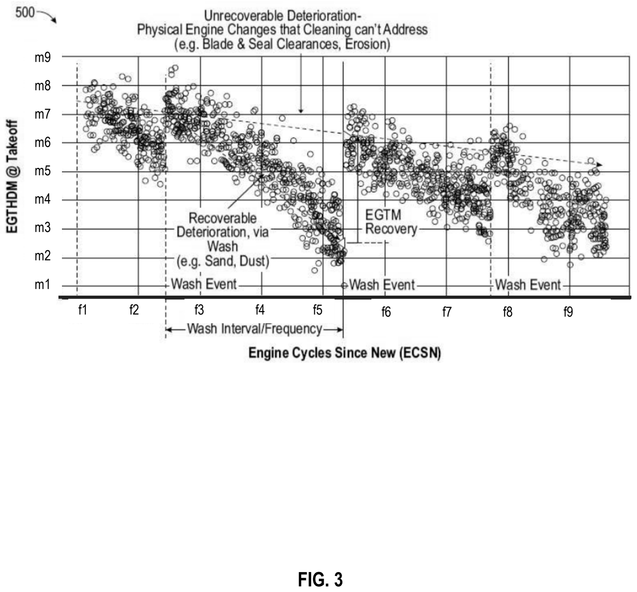

Referring to FIG. 3, a graph 500 illustrating engine exhaust gas temperature margin (EGTM) at takeoff is shown. The graph 500 illustrates EGTHDM, e.g., EGTM at takeoff (e.g., y-axis, values m1-m9) and engine cycles since new (ECSN) (e.g., x-axis, values f1-f9) in relation to wash events. The graph 500 illustrates how the EGTM is reduced between wash events and how the margin is improved after a wash event, where deterioration may fall into two categories: recoverable EGTM deterioration and unrecoverable EGTM deterioration. For example, EGTHDM values at takeoff may range between 15-95 degrees, and ECSN values may range between 0-1600 cycles, respectively. Recoverable EGTM deterioration, (e.g., EGTM deterioration due to sand, dust, and other accumulations), may be recovered by washing the aircraft component. Unrecoverable EGTM deterioration, which may be caused by physical engine changes, may be improved by a wash of one or more components of an engine despite the physical engine changes. With recoverable deterioration, cleaning can resolve deterioration, while with unrecoverable deterioration, cleaning may help but some of the deterioration still remains.

Data smoothing, averaging, and/or segregation of trends around engine events, (e.g., wash events), provide the benefits of simplified representations of performance behavior defined by wash recoveries, inter-wash deterioration, recoverable performance loss, and/or unrecoverable performance loss.

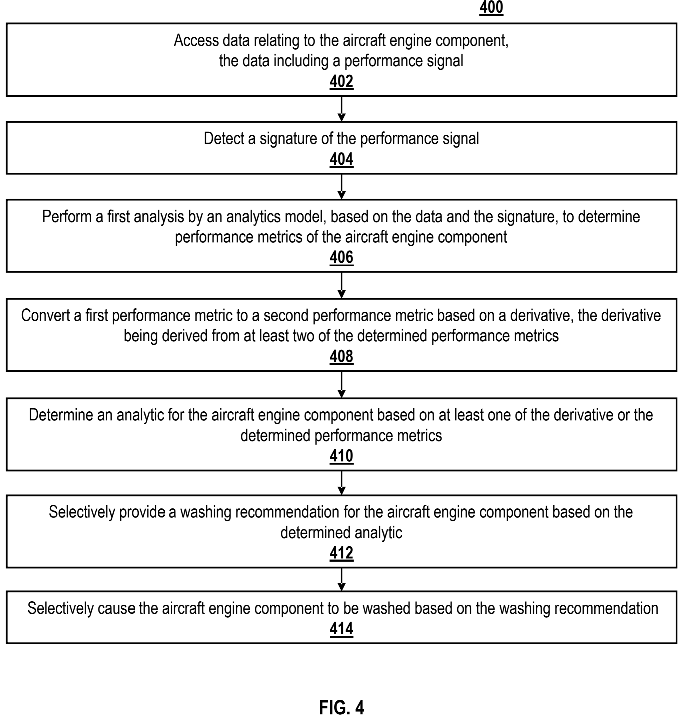

With reference to FIG. 4, a flow diagram for a method 400 of engine performance analysis for engine washing with the system 100 is shown. Although the steps of FIG. 4 are shown in a particular order, the steps need not all be performed in the specified order, and certain steps can be performed in another order. For example, FIG. 4 will be described below, with a controller 200 (FIG. 2) performing the operations. In various aspects, the operations of FIG. 4 may be performed all or in part by the analytics model 300 of FIG. 1. In aspects, the operations of FIG. 4 may be performed all or in part by another device, for example, a mobile device and/or a remote computer system. These and other variations are contemplated to be within the scope of the present disclosure.

Initially, at step 402, the controller 200 causes the system 100 to access data (e.g., historical data) relating to an engine component of an aircraft, for example, an operating jet engine. The accessed data may be derived from database 210, data collected at the time of the analysis and/or may be historical data for a particular user (e.g., a customer and/or component). Typically, the accessed data is integrated from various sources, including installation and removal records 212, flight records 214, water wash and foam cart data 216, and/or other data such as additional event data 218.

For example, a wash technician may select a set of flight records from a particular route structure, e.g., prior flights between New York and the Middle East over a 6-month period, including flight hours, cycles, and/or flight profiles. In another example, a wash technician may select a set of installation and removal records to review maintenance logs, including total operational time and/or cycles since a prior installation relating to an aircraft engine component. In another example, a wash technician may select wash data, including a foam concentration and/or wash cycle count for the last wash of the aircraft engine component. In aspects, historical and/or life events of the aircraft engine component may be arranged chronologically, with adjustments made for influencing factors, such as factors that are highly relevant and/or influential to wash recommendations.

At step 404, the controller 200 causes the system 100 to detect aircraft engine component life events. To do so, the analytics model 300 utilizes event detection analytics to detect signatures in performance signals, e.g., signatures indicating a wash event.

First, the analytics model 300 analyzes reported events (e.g., wash or shop visit and/or rating change) to perform shift detection. The analytics model 300 may accept as input data from database 210, such as water wash and foam cart data 216, which may include performance signals (e.g., calculated parameters for EGT and HPT efficiency). For example, EGTHDM and/or HPC efficiency are expected to increase across an effective wash, while EGT and/or fuel flow are expected to decrease. Where the date of an event for a given engine is accepted, the appropriate performance signals around the relevant date are accepted to define certain performance signatures relative to the wash(es). Generally, the performance signatures will be immediate shifts in multiple performance signals. In some aspects, calculated parameters are derived from sensor measurements including T1, T3, P3, and/or fuel flow.

Next, analytics model 300 may detect unreported events (e.g., unreported washes detected by performance signal shifts). The analytics model 300 may accept as input flight snapshot performance data over a period of time, such as flight records 214. The shift detections determined above may be compared to reported events (e.g., events in database 210) to determine where unreported events may have occurred, e.g., a wash event. For example, by analyzing the input data, the analytics model 300 detects a relational change in the performance signals over a period of time, such as a 5% decrease in EGT and/or 3% improvement in HPC within a given period of flight cycles due to removal of particulate matter such as dust, sand, and/or ash contamination, which may indicate a wash event. In aspects of this disclosure, the system 100 logs various data based on the unreported wash event for further analytics, such as a date and/or time.

At step 406, the controller 200 causes the system 100 to perform a first analysis, which determines performance metrics of the aircraft engine or one or more components thereof (e.g., a deterioration rate, deterioration from a previous wash or installation, a recovery, and a recovery ratio). During the first analysis, the historical data and/or the performance signal signatures are fed into to the analytics model 300, which in turn determines performance metrics relating to a set of, for example, 25 or more aircraft engine component parameters. In an example, the analytics model 300 receives historical pre- and/or post-wash data, historical flight data, and/or other unreported data based on the aircraft engine or components thereof. In another example, the analytics model 300 derives parameters from one or more flight phases/operational conditions, measurements, and/or metrics based on measurements, such as EGT recovery, cruise EGT deterioration since last wash, cruise fuel flow recovery ratio, and/or climb HPC efficiency deterioration since installation.

In one aspect, the controller 200 causes the system 100 to perform a second analysis based on the performance metrics in step 406, which eliminates outliers and/or improves the performance metrics calculated. The second analysis is generally calculated using a Winsorized mean statistical technique, such as an averaging technique. For example, the analytics model 300 can use a Winsorized mean to sort EGT values pre- and post-wash by first replacing a percentage of extreme values (e.g., the lowest and highest 5% of values) with the next closest valid data points, truncating the extreme values, then calculating a Winsorized mean by averaging the adjusted EGT values pre- and post-wash. In doing so, the analytics model 300 is less likely to rely on outlier EGT data unrelated to a wash event, which could skew analytics and subsequent wash recommendations. In aspects, the second analysis is calculated using a Z-score method, which identifies outliers by measuring how many standard deviations a data point deviates from a mean (e.g., enabling detection of abnormal trends). For example, if EGT recovery has a Z-score greater than 3 or less than -3, the data point may be flagged as an outlier and/or adjusted to improve accuracy of the analysis. It will be understood that the second analysis may be calculated using various alternative methods, such as the interquartile range (IQR) method, Mahalanobis distance, local outlier factor (LOF), density-based spatial clustering (DBSCAN), isolation forest, moving average and exponential smoothing, and/or other methods known for eliminating outliers and improving performance metrics calculated.

In one aspect, the analytics model 300 performs a normalization technique and/or a weighting technique on the performance metrics, in order to further quantify benefits and/or analytics. For example, when calculating parameters related to EGT, a weighted averaging may be used to give more weight to an EGT-related metric having a larger signal-to-noise ratio compared to other performance signals.

At step 408, the controller 200 causes the system 100 to convert performance metrics based on a derived derivative in order to further improve quantifying benefits. For example, a high-pressure compressor (HPC) efficiency metric may be converted to an engine gas temperature hot day margin (EGTHDM) metric in order to quantify a benefit and/or an analytic when a particular parameter is absent.

At step 410, the controller 200 causes the system 100 to determine an analytic (e.g., wash benefits) for the aircraft engine component based on the performance metrics and/or the derived derivative, e.g., from any converted performance metrics based on the derived derivative. For example, analytics based on detailed engine wash data such as the use of foam over water and/or wash benefits for a first customer versus a second customer may be determined.

At step 412, the controller 200 causes the system 100 to selectively provide a recommendation 310 based on the determined analytic. The recommendation 310 may include how to wash an aircraft engine component (e.g., a wash type such as foam or water), how often and/or when to wash an aircraft engine component (e.g., a wash frequency such as to wash every 500 cycles, presently, and/or in the 200 cycles that come next), and/or what specific aircraft engine(s) or engine component(s) to prioritize for washing, for instance, in comparison to one or more other engines and/or components of one or more engines within, for example, a given fleet (e.g., a wash priority).

The recommendation 310 (FIG. 1) may be displayed using customer data and/or a simplified deterioration model illustrating deterioration and recovery characteristics over time (e.g., via linearized, cycles-based performance deterioration and recovery modeling techniques, such as sawtooth modeling techniques). For example, a technician device may display a sawtooth model that visualizes how HPC efficiency improves after a particular engine wash for a specific aircraft engine component, which provides analytics based on the most advantageous wash intervals to maximize engine performance and minimize maintenance costs. The recommendations 310 (FIG. 1) may be displayed on a graphical user interface (GUI), such as a GUI of a technician computer, smartphone, and/or tablet, or a standalone device.

At step 414, the controller 200 causes the system 100 to selectively cause the aircraft engine component to be washed based on the recommendation 310. For instance, an electronic signal or machine translatable file can be communicated to the controller. The controller 200 communicates with a valve, for instance, to selectively cause such valve to open for enabling water, foam, etc. to be dispensed (e.g., sprayed) on an engine or component of the engine for effectuating a wash. In aspects, the controller 200 determines a frequency of washes and/or implements washes at a specific frequency based on the recommendation 310. For example, if the system 100 detects a high-dust environment and/or faster degradation, the controller 200 may adjust the wash frequency from every 500 cycles to every 300 cycles. In aspects, the controller determines additional features such as a type of wash and/or materials (e.g., foam wash, washing fluid, and/or other liquid-based wash). For example, if an aircraft engine is operating in a region with high salt exposure, the controller 200 may recommend a foam wash instead of a standard water wash. In aspects, the controller 200 automatically implements one or more aspects of the recommendation 310. For example, based on a detected level of engine performance degradation, the controller 200 may trigger an automated wash cycle using the recommended wash type and fluid composition, providing the benefit of consistent maintenance with little to no manual intervention.

In aspects, machine learning (ML) and/or artificial intelligence (AI) technologies may be employed to improve and/or predict various engine wash benefits. For example, an ML model may identify patterns in historical data to predict future engine performance. By combining ML techniques with performance analytics, system 100 may provide the benefits of the most advantageous engine wash schedules, minimized fuel consumption, and maximized engine life.

The aspects disclosed herein describe various benefits over current systems for engine performance analysis, which are less effective in accurately quantifying the benefits of washing. Such systems have limitations posing significant challenges in meeting customer demands for detailed and precise analysis due to insufficient metrics. The aspects disclosed herein overcome such deficiencies by providing a clearer understanding of how washing affects engine performance over time. Specifically, the aspects herein discuss systems and methods of engine performance analysis for engine washing.

The aspects disclosed herein describe a set of techniques and streamlined processes designed to more accurately quantify the benefits of customer washes, e.g., engine performance analysis for engine washing. For example, a system for engine performance analysis for engine washing integrates data from various different sources and calculates performance metrics using multiple operational parameters, while additionally employing efficient averaging techniques and adjusting for other influencing events. In doing so, the system provides the benefit of increased analytical accuracy for washing recommendations, overcoming the challenges of addressing varying rates of deterioration, such as varying levels of dust, sand, hydrocarbons, salt, and/or de-icing fluid exposure due to different route structures. The system also provides the benefit of tailored recommendations for different types of washing, such as different fluids for washes including water, foam, and/or detergent, with various washing machines and at different cycle intervals. In doing so, the system provides integrated, data-driven analytics to evaluate the effects of engine washing on key performance metrics such as exhaust gas temperature hot day margin (EGTHDM) recovery, fuel flow reduction, and CO₂ emission reduction. Thus, the system overcomes challenges to accurately analyzing improvements in terms of EGTHDM, fuel flow reduction, and HPC/HPT efficiency.

The aspects disclosed herein also discuss technical and commercial advantages of systems and methods of engine performance analysis for engine washing. For example, the system assists the foam washing teams in conducting more accurate performance analyses on trial data, thereby securing customer commitments to switch to foam washes. These accurate wash performance analyses leads to improved take-off weight (TOW), dollar savings for manufacturers, and fuel savings for customers. Moreover, automating and operationalizing performance analysis for 1000+ washes across multiple parameters enables quick turnaround times for both manufacturers and their customers.

The aspects disclosed herein are examples of the disclosure and may be embodied in various forms. For instance, although certain aspects herein are described as separate aspects, each of the aspects herein may be combined with one or more of the other aspects herein. Specific structural and functional details disclosed herein are not to be interpreted as limiting, but as a basis for the claims and as a representative basis for teaching one skilled in the art to variously employ this disclosure in virtually any appropriately detailed structure.

The phrases "in an aspect," "in aspects," "in various aspects," "in some aspects," or "in other aspects" may each refer to one or more of the same or different aspects in accordance with this disclosure.

Further aspects of the present disclosure are provided by the subject matter of the following clauses.

A system for performance analysis of an aircraft engine component, the system comprising: a processor and a non-transitory memory including instructions which, when executed by the processor, cause the system to at least: access data relating to the aircraft engine component, the data including a performance signal; detect a signature of the performance signal; perform a first analysis by an analytics model, based on the data and the signature, to determine performance metrics of the aircraft engine component;

convert a first performance metric to a second performance metric based on a derivative, the derivative being derived from at least two of the determined performance metrics; determine an analytic for the aircraft engine component based on at least one of the derivative or the determined performance metrics; selectively provide a washing recommendation for the aircraft engine component based on the determined analytic; and selectively cause the aircraft engine component to be washed based on the washing recommendation.

The system according to the preceding clause, wherein the instructions, when executed by the processor, further cause the system to at least: perform a second analysis by the analytics model, based on the determined performance metrics, to eliminate outliers and to improve the performance metrics.

The system according to any preceding clause, wherein the second analysis is performed using a Winsorized mean averaging technique.

The system according to any preceding clause, wherein the data is integrated from at least two of install data, removal data, flight records, water wash data, foam cart data, or additional event data.

The system according to any preceding clause, wherein the performance metrics are based on a plurality of parameters of the aircraft engine component, the performance metrics including at least one of a deterioration rate of the aircraft engine component, deterioration of the aircraft engine component from a previous wash or installation, a recovery of the aircraft engine component, or a recovery ratio of the aircraft engine component.

The system according to any preceding clause, wherein detecting the signature of the performance signal includes detecting a shift in the performance signal relating to the aircraft engine component, and wherein the instructions, when executed by the processor, further cause the system to at least: determine an unreported wash event based on the detected signature and the data.

The system according to any preceding clause, wherein the instructions, when executed by the processor, further cause the system to at least arrange component life events sequentially.

The system according to any preceding clause, wherein the instructions, when executed by the processor, further cause the system to at least: execute at least one of a normalization technique or a weighting technique on the determined performance metrics.

The system according to any preceding clause, wherein the first performance metric is a high-pressure compressor (HPC) efficiency, and the second performance metric is an engine exhaust gas temperature hot day margin (EGTHDM).

The system according to any preceding clause, wherein the washing recommendation is displayed with one or more performance deterioration and recovery modeling techniques, and wherein the washing recommendation for the aircraft engine component includes at least one of a wash type, a wash frequency, or a wash priority.

A processor-implemented method for performance analysis of an aircraft engine component, the processor-implemented method comprising: accessing data of the aircraft engine component, the data including a performance signal; detecting a signature of the performance signal; performing a first analysis by an analytics model, based on the data and the signature, to determine performance metrics of the aircraft engine component; converting a first performance metric to a second performance metric based on a derivative, the derivative being derived from at least two of the determined performance metrics; determining an analytic for the aircraft engine component based on at least one of the derivative or the determined performance metrics; selectively providing a washing recommendation for the aircraft engine component based on the determined analytic; and selectively causing the aircraft engine component to be washed based on the washing recommendation.

The processor-implemented method according to the preceding clause, further comprising: performing a second analysis by the analytics model, based on the determined performance metrics, to eliminate outliers and improve the determined performance metrics.

The processor-implemented method according to any preceding clause, wherein performing the second analysis includes using a Winsorized mean averaging technique.

The processor-implemented method according to any preceding clause, wherein accessing the data includes integrating data from at least two of: install data, removal data, flight records, water wash data, foam cart data, or additional event data.

The processor-implemented method according to any preceding clause, wherein performing the first analysis includes determining performance metrics based on a plurality of parameters of the aircraft engine component, the performance metrics including at least one of a deterioration rate of the aircraft engine component, deterioration of the aircraft engine component from a previous wash or installation, a recovery of the aircraft engine component, or a recovery ratio of the aircraft engine component.

The processor-implemented method according to any preceding clause, wherein detecting the signature of the performance signal includes detecting a shift in the performance signal relating to the aircraft engine component, and wherein the processor-implemented method further comprises: determining an unreported wash event based on the detected signature and the data.

The processor-implemented method of according to any preceding clause, further comprising: arranging component life events sequentially.

The processor-implemented method according to any preceding clause, further comprising: performing at least one of a normalization technique or a weighting technique on the determined performance metrics.

The processor-implemented method according to any preceding clause, wherein providing the washing recommendation includes displaying the washing recommendation with one or more performance deterioration and recovery modeling techniques, and wherein the washing recommendation for the aircraft engine component includes at least one of a wash type, a wash frequency, or a wash priority. A non-transitory computer readable storage medium including instructions that, when executed by a computer, cause the computer to perform a processor-implemented method for performance analysis of an aircraft engine component, the processor-implemented method comprising: accessing data of the aircraft engine component, the data including a performance signal; detecting a signature of the performance signal; performing a first analysis by an analytical model, based on the data and the signature, to determine performance metrics of the aircraft engine component; converting a first performance metric to a second performance metric based on a derivative, the derivative being derived from at least two of the determined performance metrics; determining an analytic for the aircraft engine component based on at least one of the derivative or the determined performance metrics; selectively providing a washing recommendation for the aircraft engine component based on the determined analytic; and selectively causing the aircraft engine component to be washed based on the washing recommendation.

It should be understood that the description herein is only illustrative of this disclosure. Various alternatives and modifications can be devised by those skilled in the art without departing from the disclosure. Accordingly, this disclosure is intended to embrace all such alternatives, modifications, and variances. The aspects described are presented only to demonstrate certain examples of the disclosure. Other elements, steps, methods, and techniques that are insubstantially different from those described above and/or in the appended claims are also intended to be within the scope of the disclosure.

## Claims

1. A system for performance analysis of an aircraft engine component, the system comprising:
a processor; and
a non-transitory memory including instructions which, when executed by the processor, cause the system to at least:
access data relating to the aircraft engine component, the data including a performance signal;
detect a signature of the performance signal;
perform a first analysis by an analytics model, based on the data and the signature, to determine performance metrics of the aircraft engine component;
convert a first performance metric to a second performance metric based on a derivative, the derivative being derived from at least two of the determined performance metrics;
determine an analytic for the aircraft engine component based on at least one of the derivative or the determined performance metrics;
selectively provide a washing recommendation for the aircraft engine component based on the determined analytic; and
selectively cause the aircraft engine component to be washed based on the washing recommendation.

2. The system of claim 1, wherein the instructions, when executed by the processor, further cause the system to at least:
perform a second analysis by the analytics model, based on the determined performance metrics, to eliminate outliers and to improve the performance metrics; and
wherein, optionally, the second analysis is performed using a Winsorized mean averaging technique.

3. The system of any preceding claim, wherein the data is integrated from at least two of install data, removal data, flight records, water wash data, foam cart data, or additional event data.

4. The system of any preceding claim, wherein the performance metrics are based on a plurality of parameters of the aircraft engine component, the performance metrics including at least one of a deterioration rate of the aircraft engine component, deterioration of the aircraft engine component from a previous wash or installation, a recovery of the aircraft engine component, or a recovery ratio of the aircraft engine component.

5. The system of any preceding claim, wherein detecting the signature of the performance signal includes detecting a shift in the performance signal relating to the aircraft engine component, and wherein the instructions, when executed by the processor, further cause the system to at least:
determine an unreported wash event based on the detected signature and the data.

6. The system of any preceding claim, wherein the instructions, when executed by the processor, further cause the system to at least arrange component life events sequentially.

7. The system of any preceding claim, wherein the instructions, when executed by the processor, further cause the system to at least:
execute at least one of a normalization technique or a weighting technique on the determined performance metrics.

8. The system of any preceding claim, wherein the first performance metric is a high-pressure compressor (HPC) efficiency, and the second performance metric is an engine exhaust gas temperature hot day margin (EGTHDM).

9. The system of any preceding claim, wherein the washing recommendation is displayed with one or more performance deterioration and recovery modeling techniques, and
wherein the washing recommendation for the aircraft engine component includes at least one of a wash type, a wash frequency, or a wash priority.

10. A processor-implemented method for performance analysis of an aircraft engine component, the processor-implemented method comprising:
accessing data of the aircraft engine component, the data including a performance signal;
detecting a signature of the performance signal;
performing a first analysis by an analytics model, based on the data and the signature, to determine performance metrics of the aircraft engine component;
converting a first performance metric to a second performance metric based on a derivative, the derivative being derived from at least two of the determined performance metrics;
determining an analytic for the aircraft engine component based on at least one of the derivative or the determined performance metrics;
selectively providing a washing recommendation for the aircraft engine component based on the determined analytic; and
selectively causing the aircraft engine component to be washed based on the washing recommendation.

11. The processor-implemented method of claim 10, further comprising:
performing a second analysis by the analytics model, based on the determined performance metrics, to eliminate outliers and improve the determined performance metrics;
wherein, optionally, performing the second analysis includes using a Winsorized mean averaging technique.

12. The processor-implemented method of claim 10 or 11, wherein performing the first analysis includes determining the performance metrics based on a plurality of parameters of the aircraft engine component, the performance metrics including at least one of a deterioration rate of the aircraft engine component, deterioration of the aircraft engine component from a previous wash or installation, a recovery of the aircraft engine component, or a recovery ratio of the aircraft engine component.

13. The processor-implemented method of any of claims 10 to 12, wherein detecting the signature of the performance signal includes detecting a shift in the performance signal relating to the aircraft engine component, and wherein the processor-implemented method further comprises:
determining an unreported wash event based on the detected signature and the data.

14. The processor-implemented method of any of claims 10 to 13, wherein providing the washing recommendation includes displaying the washing recommendation with one or more performance deterioration and recovery modeling techniques, and
wherein the washing recommendation for the aircraft engine component includes at least one of a wash type, a wash frequency, or a wash priority.

15. A non-transitory computer readable storage medium including instructions that, when executed by a computer, cause the computer to perform a processor-implemented method for performance analysis of an aircraft engine component, the processor-implemented method comprising:
accessing data of the aircraft engine component, the data including a performance signal;
detecting a signature of the performance signal;
performing a first analysis by an analytical model, based on the data and the signature, to determine performance metrics of the aircraft engine component;
converting a first performance metric to a second performance metric based on a derivative, the derivative being derived from at least two of the determined performance metrics;
determining an analytic for the aircraft engine component based on at least one of the derivative or the determined performance metrics;
selectively providing a washing recommendation for the aircraft engine component based on the determined analytic; and
selectively causing the aircraft engine component to be washed based on the washing recommendation.
